# EUROPÄISCHE PATENTANMELDUNG

(11) **EP 0 974 488 A2**
(43) Veröffentlichungstag der Anmeldung: **26.01.2000**
(21) Anmeldenummer: 99109000.2
(22) Anmeldetag: 06.05.1999
(51) Int. Cl.: B60R 9/04

(54) **Stützfuss für ein Relingrohr auf einem Fahrzeugdach**

(30) Priorität: 22.07.1998 DE 19832922
(71) Anmelder: JAC Products Deutschland GmbH, 42285 Wuppertal (DE)
(72) Erfinder: Evels, Brigitte, 42119 Wuppertal (DE); Drees, Markus, 28355 Bremen (DE)

(57) **Zusammenfassung**

Beschrieben wird ein Stützfuß für eine auf einem Kraftfahrzeug anordbare Dachreling. Der Stützfuß umfaßt einen hohlen Stützfußkörper (1) mit einer Bodenplatte (3). Die Bodenplatte (3) ist von einer Unterlage (6) untergriffen, die an der Bodenplatte (3) mittels eines Befestigungselements (14) festgelegt ist, wobei das Befestigungselement (14) bereichsweise auf der Bodenplatte (3) aufliegt und bereichsweise die Unterlage (6) untergreift. Der Zusammenhalt wird über einen das Befestigungselement (14) an die Innenfläche der Bodenplatte (3) heranziehenden Gewindebolzen (16) gesichert.

## Beschreibung

Die Erfindung bezieht sich auf einen Stützfuß für eine auf einem Kraftfahrzeug anordbare Dachreling.

Die DE 42 23 898 A1 zeigt eine Dachreling, die aus einem Holm mit an dessen Enden sitzenden Stützfüßen besteht. Jeder Stützfuß besteht aus einem hohlen Stützfußkörper mit einer Bodenplatte, die an einem im Hohlraum des Stützfußkörpers befestigten Aufnahmeelement angeordnet ist. In einem Durchbruch der Bodenplatte sitzt ein Einsatz, der eine mit Innengewinde versehene Bohrung aufweist, welche für einen zur Befestigung der Dachreling auf einem Fahrzeugdach vorgesehenen Gewindebolzen dient.

In der DE 31 23 106 ist eine Unterlage für den Stützfuß einer auf einem Kraftfahrzeug anordbaren Dachreling gezeigt. Die Unterlage besteht aus einer Dichtungsplatte, einer darauf angeordneten Druckplatte und einer diese übergreifenden, unmittelbar am Stützfuß anliegenden Manschette, die jeweils eine Durchgangsöffnung für einen am Relingfuß angeordneten Befestigungsbolzen aufweisen. Dabei sind die Dichtungsplatte, die Druckplatte und die Manschette durch Verbindungsmittel aneinander festgelegt. So kann zwischen der Dichtungsplatte und der Druckplatte eine Klebeverbindung und zwischen der Druckplatte und der Manschette eine Steckverbindung vorgesehen sein. Für eine Vormontage der gesamten mehrteiligen Unterlage am Stützfuß kann ein Gewindebolzen vorgesehen sein, der eine Bohrung der Dichtungsplatte durchsetzt, die im Durchmesser kleiner als der Durchmesser des Gewindebolzens ist. Der Gewindebolzen verlangt aber eine Innengewindeaufnahme im Stützfuß, der somit massiv oder mit einem in der DE 42 23 898 A1 gezeigten, separat zu fertigenden und am Stützfuß zu befestigenden Einsatzteil ausgestattet werden muß.

Der Erfindung liegt die Aufgabe zugrunde, einen mit Unterlage und Gewindebolzen montagefertig ausgestatteten Stützfuß zur Verfügung zu stellen, der einfach und kostengünstig herzustellen ist und bei dem die Unterlage ohne aufwendige Klebeoperationen oder dgl. richtig positioniert transportsicher gehalten ist.

Zur Lösung dieser Aufgabe ist erfindungsgemäß ein Stützfuß für eine auf einem Kraftfahrzeug anordbare Dachreling vorgesehen mit einem hohlen Stützfußkörper, einer am Stützfußkörper ausgebildeten Bodenplatte, einer an der Bodenplatte anliegenden Unterlage und einem die Unterlage bereichsweise untergreifenden Befestigungselement, wobei die Bodenplatte eine erste Öffnung zum bereichsweisen Einführen des Befestigungselements in den Hohlraum des Stützfußkörpers und eine zweite Öffnung zum einendigen verdrehsicheren Eingreifen eines Ausgleichselements, wie ein Abstützdom aufweist, wobei am Befestigungselement ein Muttergewinde ausgebildet oder angeordnet ist, in das ein das Ausgleichselement durchsetzender und sich daran abstützender Gewindebolzen eindrehbar ist und wobei durch Eindrehen des Gewindebolzens in das Muttergewinde das Befestigungselement mit dem gewindeseitigen Endbereich an die Innenseite der Bodenplatte und mit dem anderen Endbereich, der stufenförmig abgesetzt ist, unter Einschluß eines Unterlagenbereichs an die Außenseite der Bodenplatte heranziehbar ist.

Der erfindungsgemäße Stützfuß ist ein einstückiges, materialeinheitliches Bauteil aus Metall oder ggf. Kunststoff und umfaßt einen hohlen Stützfußkörper mit einer daran ausgebildeten Bodenplatte. Mit lediglich einem Befestigungselement kann im Zusammenwirken mit einem Gewindebolzen sowohl eine Festlegung der Unterlage am Stützfuß wie auch eine Festlegung des Stützfußes an einem Fahrzeugdach erfolgen.

Das Befestigungselement besteht zweckmäßigerweise aus einem Blechstreifen, der im etwa mittleren Bereich die stufenförmige, etwa der Dicke der Bodenplatte entsprechende Absetzung aufweist und der an einem Endbereich mit dem Muttergewinde versehen ist, welches als Gewindedurchzug ausgebildet ist oder aus einer Schweiß- bzw. Stanzmutter besteht. Ein solches Befestigungselement ist verständlicherweise besonders einfach und kostengünstig in der Herstellung.

Gemäß einer Ausgestaltung der Erfindung kann das Befestigungselement am gewindeseitigen Endbereich einen abgewinkelten Materiallappen aufweisen. Diese Maßnahme dient in erster Linie dazu, die Festigkeit und Steifheit des Befestigungselements zu erhöhen.

Eine weitere Ausgestaltung der Erfindung sieht vor, daß das Befestigungselement eine freigeschnittene und nach unten abgewinkelte Positionsnase aufweist. Dadurch läßt sich das Befestigungselement leichter positionieren, wobei insbesondere an das sichere Finden des Muttergewindes gedacht ist.

Gemäß einer noch weiteren Ausgestaltung der Erfindung kann vorgesehen sein, daß die Unterlage eine längliche, zumindest der Breite des Befestigungselements entsprechende Ausnehmung aufweist, die an einem Längsende von einem Steg überbrückt und am anderen Längsende durch eine freigeschnittene und zweifach abgewinkelte, vom Befestigungselement untergreifbare Zunge begrenzt ist. Die Stegüberbrückung ermöglicht ein einfaches Einfädeln des Befestigungselements und stellt im Zusammenwirken mit der vom Befestigungselement untergreifbaren Zunge eine dichtende Anpressung der Unterlage am Stützfuß sicher.

Die Unterlage kann aus einem Gummi- oder Kunststoffmaterial gebildet sein, ggf. aber auch aus einer Kombination dieser Materialien. Letzteres kann beispielsweise dann von Vorteil sein, wenn die Unterlage gemäß einer Weiterbildung der Erfindung einen umlaufenden, sich an der Stützfußwandung anschmiegenden Kragen aufweist.

Eine besonders vorteilhafte Weiterbildung der Erfindung besteht darin, daß der Stützfußkörper mit Bodenplatte aus einem Hochdruckumformteil besteht. Insoweit kann mit besonderem Vorteil weiterhin vorgesehen sein, daß der Stützfußkörper über einen Relingholm einstückig mit einem zweiten spiegelbildlich gestalteten Stützfußkörper ausgebildet ist. Es soll aber auch im Rahmen der Erfindung liegen, einen Stützfuß oder eine zwei Stützfüße und einen diese einstückig und materialeinheitlich miteinander verbindenden Holm umfassende Dachreling aus Kunststoff einzusetzen, wobei Stützfuß oder Dachreling als Kunststoff-Spritzgußteile nach dem Gasinnendruckverfahren gefertigt sein können.

Ein Ausführungsbeispiel der Erfindung wird nachfolgend anhand der Zeichnungen näher erläutert, und es zeigen:
- Fig. 1: einen vertikalen Längsschnitt durch einen Stützfuß mit Unterlage und Befestigungselement,
- Fig. 2: eine schaubildliche Ansicht des Befestigungselements nach Fig. 1 und
- Fig. 3: eine schaubildliche Ansicht der Unterlage nach Fig. 1.

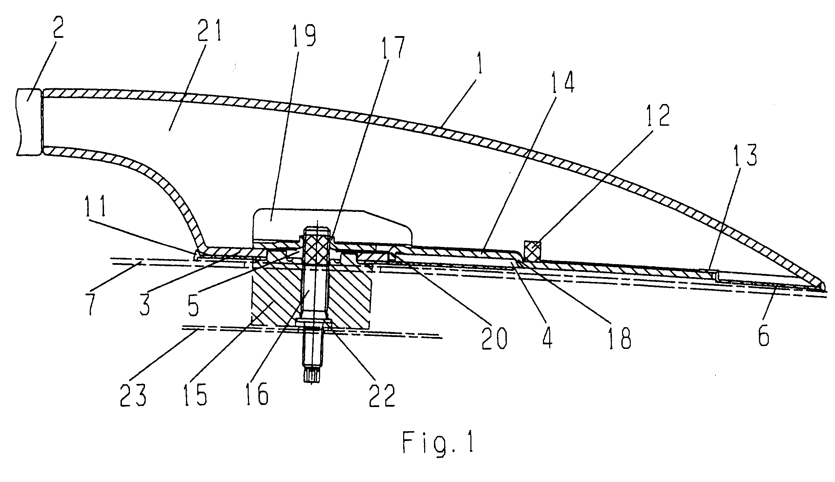

Der Stützfuß besteht aus einem hohlen Stützfußkörper 1, an den sich ein einstückig mit dem Stützfußkörper 1 oder von diesem getrennt ausgebildeter Holm 2 anschließt. Am anderen, nicht gezeigten Holmende schließt sich ein zweiter ebenfalls nicht gezeigter Stützfuß an, der spiegelbildlich dem nach Fig. 1 entspricht. Am Stützfußkörper 1 ist einstückig eine Bodenplatte 3 angeformt, die eine erste Öffnung 4 und eine zweite Öffnung 5 aufweist.

Der Stützfußkörper 1 ist von einer Unterlage 6 untergriffen, die aus Gummi oder Kunststoff oder einer Kombination dieser Materialien bestehen kann. Durch die Unterlage 6 wird ein unmittelbarer Kontakt zwischen dem Stützfuß und dem Fahrzeugdach 7 vermieden. Zudem dient die Unterlage 6 als Dichtelement und besitzt auch eine toleranzausgleichende Funktion.

Die Unterlage 6 weist einen Boden 8 mit einer ersten länglichen Öffnung 9 und einer zweiten unrunden Öffnung 10 auf. Ferner ist die Unterlage 6 mit einem umlaufenden, sich an der Wandung des Stützfußkörpers 1 wie auch am Fahrzeugdach 7 anschmiegenden Kragen 11 ausgestattet. Die erste Öffnung 9 der Unterlage 6 wird einendig von einem hochgestellten Steg 12 überbrückt und am anderen Längsende durch eine freigeschnittene und zweifach abgewinkelte Zunge 13 begrenzt.

Die Unterlage 6 wird am Stützfußkörper 1 durch ein Befestigungselement 14, das mit einem Ausgleichselement, wie ein Abstützdom 15 und einem Gewindebolzen 16 zusammenwirkt gehalten. Das Befestigungselement 14 besteht zweckmäßigerweise aus einem Blechformteil mit einer länglichen streifenartigen Ausbildung. Einem Endbereich benachbart ist im Befestigungselement 14 eine Bohrung ausgebildet, der ein Muttergewinde 17, z. B. in Form einer Stanzmutter zugeordnet ist und das Muttergewinde dient zur einendigen Aufnahme des Gewindebolzens 16.

Das Befestigungselement 14 weist etwa mittig eine stufenförmige Absetzung 18 auf. Die Höhe der Absetzung entspricht in etwa der Dicke der Bodenplatte 3. Das Befestigungselement 14 weist weiterhin einen, vornehmlich Versteifungszwecken dienenden abgewinkelten Materiallappen 19 sowie eine freigeschnittene und nach unten abgewinkelte Positionsnase 20 auf.

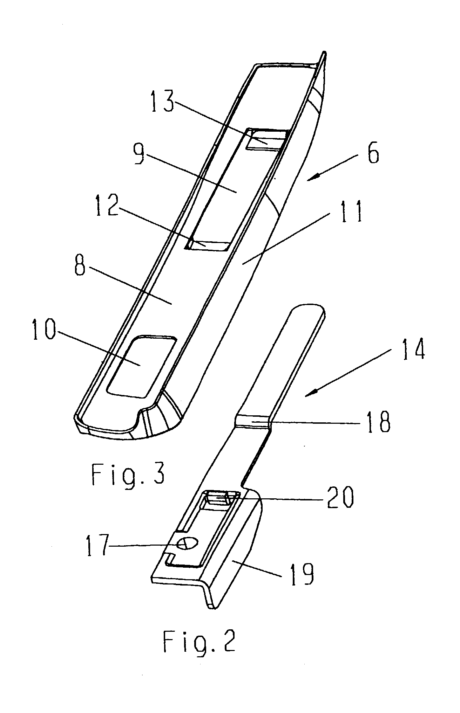

Beim Bestücken des Stützfußes mit der Unterlage 6 wird zunächst das Befestigungselement 14 durch die erste Öffnung 4 der Bodenplatte 3 in den Hohlraum 21 des Stützfußkörpers 1 eingeschoben, so daß das Muttergewinde 17 in den Bereich der zweiten Öffnung 5 der Bodenplatte 3 gelangt. Über den in Fig. 2 rechten Bereich des Befestigungselements 14 wird sodann die Unterlage 6 geschoben, und zwar mit dem Steg 12 voran soweit, bis das freie Ende des Befestigungselements 14 die Zunge 13 der Unterlage 6 untergreift. Der in Fig. 2 rechte Bereich des Befestigungselements 14 ist sodann vom Steg 12 und von der Zunge 13 übergriffen. Diese aus Befestigungselement 14 und Unterlage 6 bestehende Einheit kann nun geschwenkt und bis auf Anschlag der Positionsnase 20 verschoben werden. Damit ergibt sich eine Position, in welcher der Gewindebolzen 16, über den zunächst der Abstützdom 15 geschoben wurde, problemlos in das Muttergewinde 17 eingedreht werden kann. Da der Gewindebolzen 16 über einen Bund 22 am Abstützdom 15 abgestützt ist und der Abstützdom 15 verdrehfest in die zweite Öffnung 5 der Bodenplatte 3 eingreift, wird der auf der Zeichnung linke Bereich des Befestigungselements 14 gegen die Innenseite der Bodenplatte 3 gezogen. Gleichzeitig schwenkt der rechte Bereich des Befestigungselements 14 hoch und preßt dadurch die Unterlage 6 gegen die Unterseite des Stützfußkörpers 1.

Der Abstützdom 15 stützt sich unterendig auf dem Boden 23 eines Dachkanals ab. Sollte kein Dachkanal vorhanden sein, entfällt der Abstützdom 15, der dann durch ein verdrehsicher in die Öffnung 5 einzusetzendes Ausgleichselement (nicht gezeigt) zu ersetzen ist. Das untere freie Ende des Gewindebolzens 16 durchsetzt eine Bohrung in der nicht gezeigten Dachkonstruktion, wie Spriegel oder dgl. und dient zur Aufnahme einer den Stützfuß am Fahrzeugdach 7 fesflegenden Gewindemutter.

## Patentansprüche

1. Stützfuß für eine auf einem Kraftfahrzeug anordbare Dachreling mit
- einem hohlen Stützfußkörper (1),
- einer am Stützfußköprer (1) ausgebildeten Bodenplatte (3),
- einer an der Bodenplatte (3) anliegenden Unterlage (6) und
- einem die Unterlage (6) bereichsweise untergreifenden Befestigungselement (14),
wobei die Bodenplatte (3) eine erste Öffnung (4) zum bereichsweisen Einführen des Befestigungselements (14) in den Hohlraum (21) des Stützfußkörpers (1) und eine zweite Öffnung (5) zum einendigen verdrehsicheren Eingreifen eines Ausgleichselements, wie ein Abstützdom (15) aufweist,
wobei am Befestigungselement (14) ein Muttergewinde (17) ausgebildet oder angeordnet ist, in das ein das Ausgleichselement durchsetzender und sich daran abstützender Gewindebolzen (16) eindrehbar ist
und wobei durch Eindrehen des Gewindebolzens (16) in das Muttergewinde (17) das Befestigungselement (14) mit dem gewindeseitigen Endbereich an die Innenseite der Bodenplatte (3) und mit dem anderen Endbereich, der stufenförmig abgesetzt ist, unter Einschluß eines Unterlagenbereichs an die Außenseite der Bodenplatte (3) heranziehbar ist.

2. Stützfuß nach Anspruch 1, dadurch gekennzeichnet, daß das Befestigungselement (14) aus einem Blechstreifen besteht, der im etwa mittleren Bereich die stufenförmige, etwa der Dicke der Bodenplatte (3) entsprechende Absetzung (18) aufweist und der an seinem Endbereich mit dem Muttergewinde (17) versehen ist, welches als Gewindedurchzug ausgebildet ist oder aus einer Schweiß- bzw. Stanzmutter besteht.

3. Stützfuß nach Anspruch 1 oder 2, dadurch gekennzeichnet, daß das Befestigungselement (14) am gewindeseitigen Endbereich einen abgewinkelten Materiallappen (19) aufweist.

4. Stützfuß nach einem oder mehreren der vorangegangenen Ansprüche, dadurch gekennzeichnet, daß das Befestigungselement (14) eine freigeschnittene und nach unten abgewinkelte Positionsnase (20) aufweist.

5. Stützfuß nach einem oder mehreren der vorangegangenen Ansprüche, dadurch gekennzeichnet, daß die Unterlage (6) eine längliche, zumindest der Breite des Befestigungselements (14) entsprechende Ausnehmung (9) aufweist, die an einem Längsende von einem Steg (12) überbrückt und am anderen Längsende durch eine freigeschnittene und zweifach abgewinkelte, vom Befestigungselement (14) untergreifbare Zunge (13) begrenzt ist.

6. Stützfuß nach einem oder mehreren der vorangegangenen Ansprüche, dadurch gekennzeichnet, daß die Unterlage (6) aus einem Gummi- oder Kunststoffmaterial gebildet ist.

7. Stützfuß nach einem oder mehreren der vorangegangenen Ansprüche, dadurch gekennzeichnet, daß die Unterlage (6) einen umlaufenden, sich an der Stützfußwandung anschmiegenden Kragen (11) aufweist.

8. Stützfuß nach einem oder mehreren der vorangegangenen Ansprüche, dadurch gekennzeichnet, daß der Stützfußkörper (1) mit Bodenplatte (3) aus einem Hochdruckumformteil besteht.

9. Stützfuß nach einem oder mehreren der vorangegangenen Ansprüche, dadurch gekennzeichnet, daß der Stützfußkörper (1) über einen Relingholm (2) einstückig mit einem zweiten spiegelbildlich gestalteten Stützfußkörper (1) ausgebildet ist.
